# EUROPÄISCHE PATENTANMELDUNG

(11) **EP 1 508 717 A2**
(43) Veröffentlichungstag der Anmeldung: **23.02.2005**
(21) Anmeldenummer: 04019367.4
(22) Anmeldetag: 16.08.2004
(51) Int. Cl.: F16D 69/02, C04B 35/80, C04B 35/10, C04B 35/48

(54) **Kupplungsbeläge aus faserverstärkten keramischen Werkstoffen**

(30) Priorität: 20.08.2003 DE 10338200
(71) Anmelder: SGL CARBON AG, 65203 Wiesbaden (DE)
(72) Erfinder: Kienzle, Andreas, Dr., 86753 Möttingen (OT Balgheim) (DE); Krupka, Mario, 86477 Adelsried (DE); Cabello, Gustavo, 86152 Augsburg (DE); Hüner, Ronald, Dr., 86674 Baar (DE); Bauer, Moritz, 86153 Augsburg (DE)
(74) Vertreter: Deckers, Hellmuth, A., Dr.

(57) **Zusammenfassung**

Kupplungsbeläge aus faserverstärkten keramischen Werkstoffen, die Fasern aus Kohlenstoff enthalten, und deren Matrixmaterial ausgewählt ist aus anorganischen Polymeren, oxidischen Keramiken, abgebundenen Zementen, elementorganischen Polymeren und anorganischen dispersen Feststoffen, die durch einen anorganischen oder organischen Binder zusammengehalten sind

## Beschreibung

Die Erfindung betrifft Kupplungsbeläge aus faserverstärkten keramischen Werkstoffen.

Kupplungssysteme werden in Kraftfahrzeugen zur Trennung von Motor und Getriebe eingesetzt. In modernen Fahrzeugen werden fast ausschließlich Reibungskupplungen oder hydrodynamische Kupplungen verwendet. Bei der gebräuchlichen Reibungskupplung wird die kraftschlüssige Verbindung zwischen Motorwelle und Getriebeeingangswelle durch eine oder mehrere aufeinandergepreßte Scheiben hergestellt, wobei mindestens eine mit der Getriebeeingangswelle verbundene Kupplungsscheibe, die beiderseits Beläge trägt, zwischen der Schwungscheibe des Motors und einer Kupplungsdruckplatte angeordnet ist. Beim Treten des Kupplungspedals wird die Druckplatte entgegen der Federkraft der Tellerfeder von der Kupplungsscheibe weggedrückt, wodurch die Kupplungsscheibe freikommt. Die Verbindung zwischen Motor und Getriebe ist dadurch unterbrochen.

Die übertragbaren Drehmomente hängen von der Fläche und vom Durchmesser der Kupplungsscheibe sowie von der Federkraft der Tellerfeder ab. Für große Drehmomente werden daher Kupplungssysteme mit größerer Reibfläche oder auch Mehrscheibenkupplungen eingesetzt. Die Kupplungsscheibe unterliegt vor allem beim Anfahren einer Abnutzung durch Schleifen und erwärmt sich durch den Reibungsvorgang.

Gegenüber diesem Stand der Technik besteht die Aufgabe, Kupplungssysteme bereitzustellen, die bei geringen Einbaugrößen große Drehmomente übertragen können. Dazu werden Einscheibensysteme bevorzugt, die möglichst geringe Reibflächen erfordern.

Reibpaarungen mit keramischen Werkstoffen, insbesondere faserverstärkten keramischen Werkstoffen sind bekannt In der Anwendung als Bremsscheiben ist eine hohe Wärmebeständigkeit und ein vom Belastungszustand möglichst wenig abhängender Reibbeiwert gefordert. Für Kupplungssysteme werden hohe Haftreibung und hohe Torsionssteifigkeit gewünscht.

Aus der EP-A 0 866 923 ist eine Reibpaarung für Kupplungen bekannt, die ein Netzwerk aus Kohlenstoffasern enthält, wobei Siliciumcarbid in dem Füller enthalten ist. Das Siliciumcarbid wird durch Umsetzung des in dem Netzwerk enthaltenen nicht in Faserform vorliegenden freien Kohlenstoffs mit einer Siliciumschmelze erhalten. Bei dieser Umsetzung wird stets auch das Fasernetzwerk angegriffen, wenn nicht besondere Maßnahmen zum Faserschutz ergriffen werden, beispielsweise wie in DE-A 197 10 105 beschrieben, die die Herstellung der so geschützten Fasern erheblich verteuern.

Daher sind Beläge für Kupplungsscheiben erwünscht, die mit geringerem Aufwand zu fertigen sind, und die hohe Haftreibungswerte ergeben.

DieAufgabe wird gelöst durch Kupplungsbeläge aus faserverstärkten keramischen Werkstoffen, die Fasern aus Kohlenstoff enthalten, und deren Matrixmaterial ausgewählt ist aus anorganischen Polymeren, oxidischen Keramiken, abgebundenen Zementen, elementorganischen Polymeren und anorganischen dispersen Feststoffen, die durch einen anorganischen oder organischen Binder zusammengehalten sind.

Als anorganische Polymere werden Polymere bezeichnet, deren Hauptketten keine Kohlenstoff-Atome enthalten, sondern aus Aluminium- und/oder Bor-, Phosphor-, Sauerstoff-, Schwefel-, Silicium-, Stickstoff- und Zinn-Atomen aufgebaut sind. Insbesondere geeignet sind z. B. Polp(bornitride), Polyphosphate, Polyphosphazene, Poly(silane), Poly(siloxane), Poly(sulfazene) und Polysulfide, die eine sehr gute Wärmebeständigkeit besitzen.

Geeignete oxidische Keramiken sind insbesondere Aluminiumoxid, Zirkonoxid, und Mischoxide, die neben den genannten auch Siliciumdioxid, Boroxid, Magnesiumoxid und Titanoxid enthalten.

Insbesondere Portlandzement ist als Matrix für Kupplungsbeläge geeignet; es ist auch möglich, den als "Hochofenzement" bezeichneten genormten Zement, der Portlandzement mit einem Zuschlag von Hüttensand entsprechend einem Massenanteil von 38 % bis 80 % enthält, einzusetzen. Als "Hüttensand" wird ein silicatisches Produkt bezeichnet, das durch Abschrecken in Wasser von geschmolzener Hochofenschlacke erzeugt wird.

Geeignete elementorganische Polymere sind insbesondere polymere organische Verbindungen des Siliciums, Bor und/oder Phosphors wie Polysiloxane, Polysilazane, Polyphosphazene und Polybornitride. Sie können entweder als solche verwendet werden (Polybornitride), oder durch Wärmebehandlung in thermisch stabile Stoffe umgewandelt werden (z. B. Polysilazane).

Geeignete anorganische disperse Feststoffe sind insbesondere thermisch stabile binäre Verbindungen wie Siliciumdioxid, Siliciumnitrid, Aluminiumoxid, Titandioxid, Titancarbid, Wolframcarbid, und ternäre Verbindungen, insbesondere Silicate wie Zirkonsilicat oder Titanate wie Aluminiumtitanat, die durch Glasphasen bildende anorganische Verbindungen wie Mischsilicate gebunden sind.

Dabei ist die Auswahl der geeigneten Materialien begrenzt durch die erforderliche Temperaturbeständigkeit, die mindestens 500 °C betragen soll, und die Kompatibilität mit den Verstärkungsfasern aus Kohlenstoff. Hierbei ist das Matrixmaterial so zu wählen, daß während der Ausbildung des keramischen Gefüges kein Angriff auf die Fasern erfolgt, durch den der Kohlenstoff der Fasern beschädigt oder zerstört wird.

Die Beläge aus faserverstärkten keramischen Werkstoffen werden bevorzugt auf einem Träger aus Metall oder faserverstärkter Keramik befestigt. Dabei kann die Befestigung durch Kleben, Schrauben, Nieten oder durch andere geeignete Verbindungstechniken erfolgen.

Der Massenanteil der Verstärkungsfasern aus Kohlenstoff in dem keramischen Werkstoff beträgt bevorzugt 20 % bis 60 %, besonders bevorzugt 25 % bis 50 %, und insbesondere 30 % bis 35 %. Dabei können sowohl Langfasern in Form von Gelegen, Bändern (sogenannte UD-Tapes, also in Bandform parallel gelegte Endlosfasern), Geweben, Gewirken, Gestricken, Wirrlagen, Fliesen und Filzen eingesetzt werden; es ist auch möglich und bevorzugt, Kurzfasern einzusetzen. Als Langfasern werden Fasern mit einer gewichtsmittleren Länge von mehr als 30 mm, bevorzugt von mehr als 50 mm bezeichnet. Die gewichtsmittlere Länge der Kurzfasern aus Kohlenstoff beträgt bevorzugt 0,001 mm bis 30 mm, besonders bevorzugt 0,1 mm bis 15 mm und insbesondere 0,2 mm bis 5 mm. Der Durchmesser der Kurz- und Langfasern ist 4 µm bis 12 µm, bevorzugt 5 µm bis 10 µm, und insbesondere 6 µm bis 8 µm.

Die Beläge aus dem faserverstärkten keramischen Werkstoff sind bevorzugt 2 bis 6 mm dick und haben die Form von abgerundeten Rechtecken, abgerundeten Trapezen oder Kreisringsegmenten, wobei die Erstreckung in Richtung des Kupplungsscheibenradius bevorzugt 10 mm bis 30 mm und die in Umfangsrichtung bevorzugt 10 mm bis 90 mm beträgt. Es ist bevorzugt, mindestens 2, bevorzugt mindestens 3 und besonders bevorzugt mindestens 4 dieser Beläge symmetrisch über den Umfang der Kupplungsscheibe anzuordnen.

Die Werkstoffe für die Beläge lassen sich herstellen durch ein mehrstufiges Verfahren, bei dem im Fall der Verwendung von Kurzfasern
- im ersten Schritt Kohlenstoff-Kurzfasern mit den Ausgangstoffen für die spätere Matrix vermischt werden, gegebenenfalls unter Zusatz von plastischen thermisch zersetzbaren Hilfsmitteln, diese Mischungen
- im zweiten Schritt unter Anwendung von Druck und Temperatur zu Körpern verpreßt werden, die in ihren Abmessungen den gewünschten Belägen entsprechen,
- die Preßkörper im dritten Schritt durch Erwärmen unter Ausschluß von oxydierenden Agenzien und gegebenenfalls Zersetzen der plastischen Hilfsmittel unter Erhalt ihrer Form in poröse, von Kohlenstoff-Kurzfasem durchsetzte Körper überführt werden, die
- im vierten Schritt verdichtet werden durch Anwenden von Druck und Temperatur und/oder Füllen der Poren mit einer Schmelze eines Glases oder eines Metalls unter vermindertem Druck, wobei die Schmelze so ausgewählt wird, daß kein Angriff auf den Kohlenstoff der Verstärkungsfasern erfolgt.

Die Metalle oder Gläser, die im vierten Schritt eingesetzt werden, weisen bevorzugt eine Schmelztemperatur vom mindestens 550 °C, bevorzugt mindestens 600 °C auf. Neben den Metallen, die dieser Bedingung genügen, wie Aluminium, Eisen, Chrom, Nickel, Molybdän, Wolfram, Vanadium, Niob, Tantal, Titan und Zirkon sind insbesondere auch Legierungen wie Messing und Bronze hier bevorzugt. Bevorzugt beträgt der Massenanteil dieser Metalle in der Matrix 2 % bis 20 %. Die Temperatur, die beim vierten Schritt zum Füllen der Poren mit Gläsern oder Metallen angewandt wird, wird dabei so gewählt, daß keine Reaktion oder nur eine Reaktion in unwesentlichem Ausmaß zwischen den Gläsern oder den metallen und dem Kohlenstoff der Fasern eintritt. Als unwesentliches Ausmaß wird dabei der Fall bezeichnet, in dem weniger als 10 % der Masse des Kohlenstoffs der Fasern durch eine chemische Reaktion mit dem Metall oder Glas verbraucht wird. Es ist weiter bevorzugt, daß im vierten Schritt die Poren nur teilweise gefüllt werden, und daß anschließend in einem fünften Schritt die restlichen Poren ganz oder teilweise mit einem Metall gefüllt werden ausgewählt aus Aluminium, Eisen, Chrom, Nickel, Molybdän, Wolfram, Vanadium, Niob, Tantal, Titan und Zirkon sowie den Legierungen Messing und Bronze, wobei im fünften Schritt ein anderes Metall als im vierten Schritt eingesetzt wird.

Werden Langfasern eingesetzt, so ist es bevorzugt, diese in Formen einzulegen, deren Gestalt der Gestalt des gewünschten Belags entspricht, die Zwischenräume zwischen den Fasern mit dem die Matrix bildenden Material zu füllen und die so gefüllten Formen entsprechend den oben angeführten Schritten 2 bis 4 zu behandeln.

Soweit zum Anbringen der Beläge auf der Kupplungsscheibe Montagelöcher erforderlich sind, lassen sich diese mit Vorteil in die porösen Körper einbringen, die im dritten Schritt erhalten werden.

Eine bevorzugte Herstellungsvariante für die kurzfaserverstärkten erfindungsgemäßen Werkstoffe nutzt ein kontinuierliches Verfahren, bei dem in einem Mischer die Mischung aus den Kurzfasern und dem Binder hergestellt wird, die in eine kontinuierliche Schneckenpresse (Extruder) gefüllt und durch ein Mundstück gepreßt wird, das der Kontur der gewünschten Beläge entspricht. Der Strang wird dann zerteilt, die erhaltenen Rohlinge werden wie oben beschrieben weiter behandelt. Durch diese Art der Herstellung erhalten die Kohlenstoff-Kurzfasern eine Vorzugsorientierung senkrecht zur Reibfläche der Beläge, dies hat sich auf die Höhe der Haftreibung besonders günstig ausgewirkt.

Im Fall von Lang- oder Endlosfasern ist es bevorzugt, zumindest die Reibfläche nicht aus UD-Tapes auszuführen. Es ist bevorzugt, solche textilen Gebilde aus Endlos- oder Langfasern einzusetzen, bei dem mindestens ein Anteil von 20 % der Fasersegmente einen von Null verschiedenen Winkel mit der Oberfläche des Kupplungsbelags einschließt. Dabei werden gekrümmte Fasern in bekannter Weise geometrisch in Segmente mit einheitlicher Orientierung zerlegt, um ihre Orientierungsverteilung zu beschreiben.

## Patentansprüche

1. Kupplungsbeläge aus faserverstärkten keramischen Werkstoffen, die Fasern aus Kohlenstoff enthalten, und deren Matrixmaterial ausgewählt ist aus anorganischen Polymeren, oxidischen Keramiken, abgebundenen Zementen, elementorganischen Polymeren und anorganischen dispersen Feststoffen, die durch einen anorganischen oder organischen Binder zusammengehalten sind.

2. Kupplungsbeläge nach Anspruch 1, **dadurch gekennzeichnet, daß** das Matrixmaterial anorganische Polymere enthält ausgewählt aus Poly(bornitriden), Polyphosphaten, Polyphosphazenen, Poly(silanen), Poly(siloxanen), Poly(sulfazenen) und Polysulfiden.

3. Kupplungsbeläge nach Anspruch 1, **dadurch gekennzeichnet, daß** das Matrixmaterial oxidische Keramiken enthält ausgewählt aus Aluminiumoxid, Zirkonoxid und Mischoxiden, die neben Aluminiumoxid und Zirkonoxid noch mindestens ein weiteres Oxid ausgewählt aus Siliciumdioxid, Boroxid, Magnesiumoxid und Titanoxid enthalten.

4. Kupplungsbeläge nach Anspruch 1, **dadurch gekennzeichnet, daß** das Matrixmaterial Portlandzement und/oder Hochofenzement enthält.

5. Kupplungsbeläge nach Anspruch 1, **dadurch gekennzeichnet, daß** das Matrixmaterial elementorganische Polymere enthält ausgewählt aus polymeren organischen Verbindungen des Siliciums, Bors und Phosphors.

6. Kupplungsbeläge nach Anspruch 1, **dadurch gekennzeichnet, daß** das Matrixmaterial anorganische disperse Feststoffe enthält ausgewählt aus Siliciumdioxid, Siliciumnitrid, Aluminiumoxid, Titandioxid, Titancarbid, Wolframcarbid, Silicaten und Titanaten, die durch Glasphasen bildende anorganische Verbindungen gebunden sind.

7. Kupplungsbeläge nach Anspruch 1, **dadurch gekennzeichnet, daß** sie einen Massenanteil an Verstärkungsfasern aus Kohlenstoff von 20 % bis 60 % enthalten.

8. Kupplungsbeläge nach Anspruch 1, **dadurch gekennzeichnet, daß** Langfasern aus Kohlenstoff in Form von Gelegen, Bändern, Geweben, Gewirken, Gestricken, Wirrlagen, Fliesen und Filzen oder hurzfasem aus Kohlenstoff eingesetzt sind.

9. Kupplungsbeläge nach Anspruch 1, **dadurch gekennzeichnet, daß** sie Kurzfasem aus Kohlenstoff mit einer gewichtsmittleren Länge von 0,001 mm bis 30 mm enthalten.

10. Kupplungsbeläge nach Anspruch 1, **dadurch gekennzeichnet, daß** sie in der Matrix Metalle und/oder Gläser enthalten , die eine Schmelztemperatur vom mindestens 550 °C aufweisen.

11. Kupplungsbeläge nach Anspruch 10, **dadurch gekennzeichnet, daß** die Metalle ausgewählt sind aus Aluminium, Eisen, Chrom, Nickel, Kupfer, Molybdän, Wolfram, Vanadium, Niob, Tantal, Titan und Zirkon sind insbesondere auch Legierungen wie Messing und Bronze hier bevorzugt.

12. Verfahren zur Herstellung von Kupplungsbelägen nach Anspruch 9, **dadurch gekennzeichnet, daß**
- im ersten Schritt Kohlenstoff-Kurzfasern mit den Ausgangstoffen für die spätere Matrix vermischt werden, gegebenenfalls unter Zusatz von plastischen thermisch zersetzbaren Hilfsmitteln, diese Mischungen
- im zweiten Schritt unter Anwendung von Druck und Temperatur zu Körpern verpreßt werden, die in ihren Abmessungen den gewünschten Belägen entsprechen,
- die Preßkörper im dritten Schritt durch Erwärmen unter Ausschluß von oxydierenden Agenzien und gegebenenfalls Zersetzen der plastischen Hilfsmittel unter Erhalt ihrer Form in poröse, von Kohlenstoff hurzfasern durchsetzte Körper überführt werden, die
- im vierten Schritt verdichtet werden durch Anwenden von Druck und Temperatur und/oder Füllen der Poren mit einer Schmelze eines Glases oder eines Metalls unter vermindertem Druck, wobei die Schmelze so ausgewählt wird, daß kein Angriff auf den Kohlenstoff der Verstärkungsfasern erfolgt.

13. Verfahren zur Herstellung von Kupplungsbelägen nach Anspruch 8, **dadurch gekennzeichnet, daß**
- Langfasern aus Kohlenstoff eingelegt werden in Formen, deren Gestalt der Gestalt des gewünschten Belags entspricht, und die Zwischenräume zwischen den Fasern mit dem die Matrix bildenden Material gefüllt werden,
- im zweiten Schritt das Material in der Form unter Anwendung von Druck und Temperatur zu Körpern verpreßt wird, die in ihren Abmessungen den gewünschten Belägen entsprechen,
- die Preßkörper im dritten Schritt durch Erwärmen unter Ausschluß von oxydierenden Agenzien und gegebenenfalls Zersetzen der plastischen Hilfsmittel unter Erhalt ihrer Form in poröse, von hohlenstoff-Kurzfasern durchsetzte Körper überführt werden, die
- im vierten Schritt verdichtet werden durch Anwenden von Druck und Temperatur und/oder Füllen der Poren mit einer Schmelze eines Glases oder eines Metalls unter vermindertem Druck, wobei die Schmelze so ausgewählt wird, daß kein Angriff auf den Kohlenstoff der Verstärkungsfasern erfolgt.

14. Verfahren zur Herstellung von Kupplungsbelägen nach einem der Ansprüche 12 oder 13, **dadurch gekennzeichnet, daß** im vierten Schritt die Poren nur teilweise gefüllt werden, und daß anschließend in einem fünften Schritt die restlichen Poren ganz oder teilweise mit einem Metall gefüllt werden ausgewählt aus Aluminium, Eisen, Chrom, Nickel, Molybdän, Wolfram, Vanadium, Niob, Tantal, Titan und Zirkon sowie den Legierungen Messing und Bronze, wobei im fünften Schritt ein anderes Metall als im vierten Schritt eingesetzt wird.
